# EUROPEAN PATENT APPLICATION

(11) **EP 2 357 625 A1**
(43) Date of publication of application: **17.08.2011**
(21) Application number: 10153879.1
(22) Date of filing: 17.02.2010
(51) Int. Cl.: G08B 13/24, G01S 13/34, G01S 13/44

(54) **Microwave curtain sensor**

(71) Applicant: Honeywell International Inc., Morristown, NJ 07962 (US)
(72) Inventor: Green, Leslie Kendall, Applegate, CA 95703 (US); Helland, James, Agoura Hills, CA 91310 (US); Wu, XiaoDong, Roseville, CA 95678 (US)
(74) Representative: Fox-Male, Nicholas Vincent Humbert

(57) **Abstract**

A method and apparatus are provided for detecting an intruder. The method includes the steps of receiving an echo from opposing sides of a curtain line extending through the secure area, determining a difference between the received echos, determining a phase of the signal and generating an alarm when the determined phase changes sign between successively received echos.

## Description

The field of the invention relates to security systems and more particularly to motion sensors that detect motion that crosses in front of the sensor.

Motion sensors are generally known. One type of motion sensor is referred to as a PIR (Passive InfraRed) sensor with a curtain lens. This sensor sends an alarm only when a motion is detected that crosses in front of the sensor from one side to the other.

PIR sensors are typically provided with pairs of sensor pixels on either side of a centerline. Apparent motion is detected when an infrared source with one temperature, such as a human, passes in front of an infrared source with another temperature, such as a wall. The term "passive" means that the PIR device does not emit an infrared beam but merely passively accepts incoming infrared radiation.

Pairs of sensor pixels within the PIR (on opposing sides of a centerline) may be wired as opposing inputs to a differential amplifier. In such a configuration, the sensor inputs from opposing sides of the centerline cancel each other.

A person entering a monitored area is detected when the infrared energy emitted by the intruder's body is focused by a Fresnel lens or mirror segment on a PIR sensor array. As an intruder crosses a centerline of the PIR, an output of the differential amplifier changes sign to indicate the presence of an intruder.

While PIRs work well, they are often subject to false alarms. Accordingly, a need exists for better intrusion detection devices.

In accordance with the present invention, a method of detecting an intruder in a secure area, comprises: receiving a microwave echo from opposing sides of a curtain line extending through the secure area; determining a difference between the received echos; determining a sign of the determined difference; and generating an alarm when the determined phase changes sign between successively received echos. Preferably the determined difference is a phase difference between the echos received from opposing sides of the curtain line. Apparatus for detecting an intruder is also provided.

Examples of methods and apparatus for detecting an intruder will now be described with reference to the accompanying drawings, in which:-
FIG. 1 is a block diagram of an intrusion detection system in accordance with an illustrated embodiment of the invention;
FIG. 2 is a sum radiation pattern of the microwave source of FIG. 1;
FIG.3 is a difference radiation pattern of the amplitude monopulse comparator.
FIG. 4 is block diagram of a phase monopulse comparator that may be used by the system of FIG. 1;
FIG. 5 is block diagram of an amplitude monopulse comparator that may be used by the system of FIG. 1; and
FIG. 6 is a flow chart of process steps that may be executed by the system of FIG. 1.

Security systems and automated manufacturing systems, as well as, other automated processes may employ microwave (MW) motion sensors for motion sensing and detection. MW motion sensors may include a microwave transceiver as an active device employing electromagnetic waves lower in frequency than visible light. MW motion sensors transmit a microwave signal toward a region to be monitored and in the event that movement of an object is detected within the region, a portion of the microwave signal may be reflected back (as an echo) from the object. The movement may cause the movement of the object to modulate the reflected signal due to the Doppler Effect. When a signal is reflected from a moving object (target), it is shifted in frequency. This shift in frequency is the measured Doppler Effect and is directly proportional to the target's velocity relative to the sensor. A maximum frequency shift occurs when the target is moving straight towards the sensor, and a minimum frequency shift is observed if the target is moving at a 90 degree angle to the MW signal.

In certain security applications, it is permissible to have motion in monitored areas, but an alarm should be sounded when the motion crosses from one side of a centerline of the motion sensor to the other side. Visually, this would be as if an intruder crosses through a vertical curtain or curtain line that extends out from the motion sensor.

The present invention provides methods of detecting motion of an object crossing from one side to the other of a line that extends out from the motion sensor. Described below are several means of detecting this crossing using Doppler Effect in a microwave technology motion sensor.

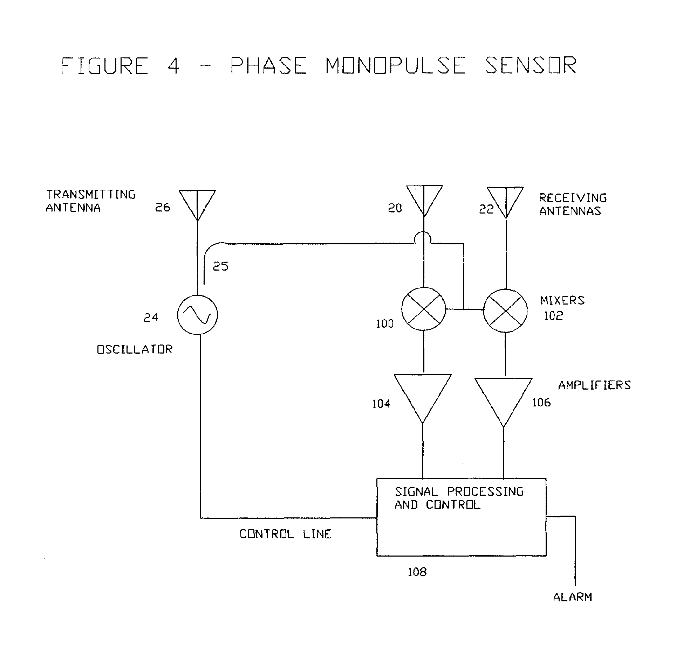

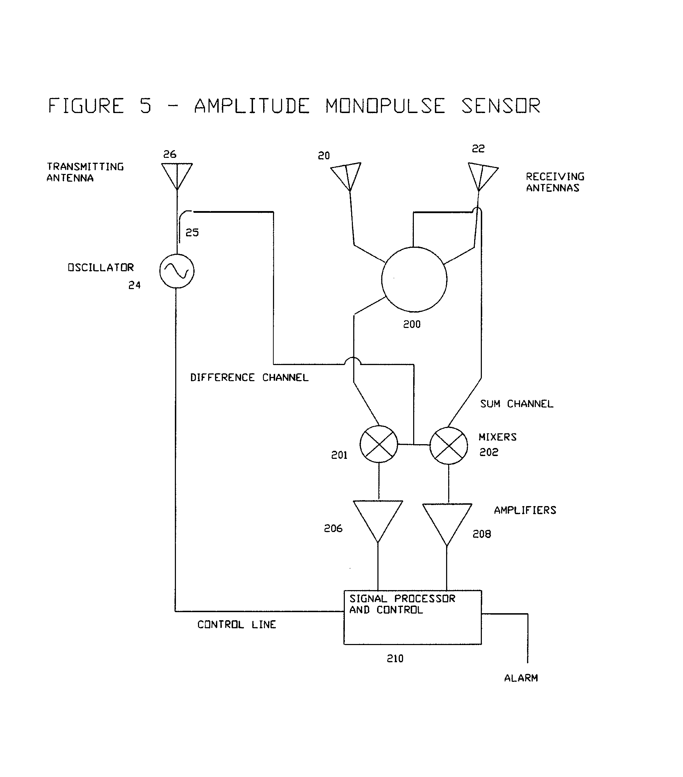

In a first illustrated embodiment of the invention, this detection is accomplished by using an Amplitude Monopulse Comparator. Two antennas are used for receiving the echo signal from the moving target. The transmitting antenna can either be the combination of the two antennas in a summing pattern fed with a circulator or can be a separate antenna as shown in FIGs. 4 and 5.

The antennas are substantially identical, but are pointed in directions that are slightly divergent. When the signals are received from the antennas, they can be summed to produce a pattern that has one beam (lobe) pointed directly away from the sensor (boresight direction) and the signals can be subtracted to produce two beams, one on each side of the boresite. By comparing the phase of the sum pattern with the difference pattern, it can be shown that the phase on one side of boresite will have a phase angle 180 degrees different from the other side. This information can then be used by a logic circuit to determine when the object moves across the boresite, i.e. when the phase changes from a plus to a minus, or minus to plus. The exact phase angle is not needed. The phase determination can either be done with hardware or software.

In a second illustrated embodiment of the invention, the detection is accomplished by using a Phase Comparison Monopulse Radar. This is also known as an Interferometer Radar, or a Simultaneous Phase Comparison Radar. It is similar to the Amplitude Monopulse Comparitor except the two antennas are both pointed directly outwards from the sensor. In this case, the angle of the phase is determined by a phase detector or signal processor. The two signals can be added to produce the sum pattern. Only the phase of the signal would be different from one side to the other since if the motion of the object is on one side of boresite, the signal from nearest antenna would lead the signal from the other antenna.

Both embodiments use the summation of the two channels to determine the signal level of the echo and use this level to make the determination of when the returning signal has reached a threshold level signifying a true target as opposed to a false target produced by noise, etc.

The phase detectors used in these two embodiments are somewhat complex since the returning Doppler signals are usually composed of several frequencies. One or more phase/frequency detectors that can be used to detect the phase change or a Fourier Transform may be performed on each channel and the phase or time difference of the transforms can be compared.

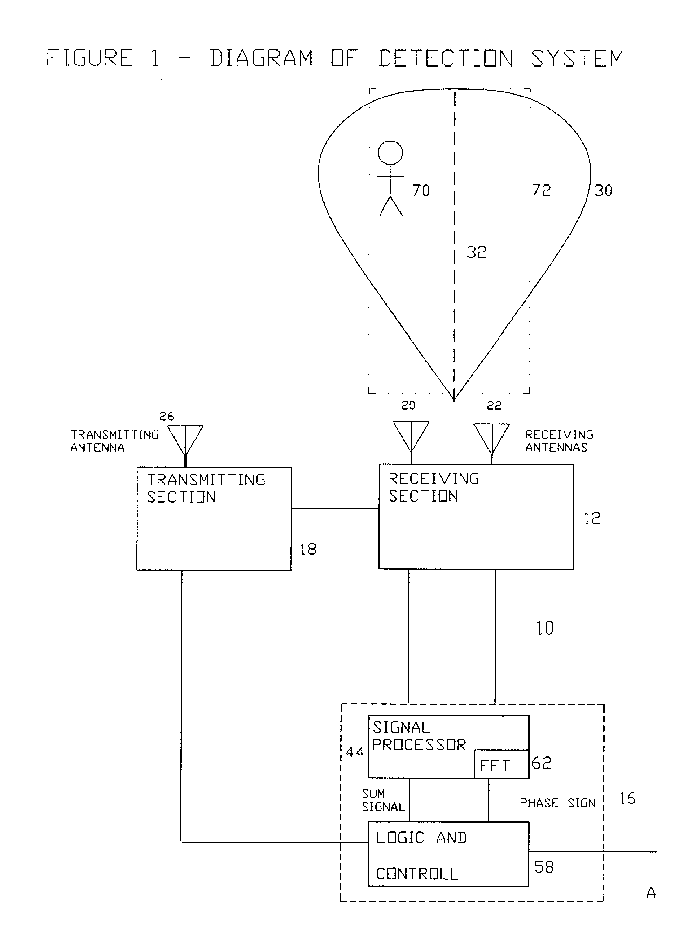

Fig 1 is a block diagram of an intrusion detection system 10 under an illustrated embodiment of the invention. The device 10 is used to detect the present of a person 70, or other moving target that crosses a centerline, 32, perpendicular to the sensor within a secure area, 72.

Included within the security detection system 10 is a transmitting section, 18, a receiving section, 12, and a signal processing and control section, 16. Both embodiments detailed in Fig 4 and Fig 5 have common sections. The receiving sections exhibit the main differences. The transmitting section 18 consists of a microwave signal generator such as an oscillator feeding an antenna 26. The signal processing and control section 16 consist of a signal processing section 44, and a control and logic section 58. The signal processing section determines the amplitude and sign of the signal returned by the receiving antennas 20 and 22. The control and logic section 58, determine if an alarm condition has been met and controls the transmitting section, 18. It does this by determining that the reflected signal has the required strength and that the phase of the two signal channels experiences a sign change indicating a movement from one side of the centerline (boresite) to the other side. Depending on how the phase is determined, the logic section 18 may include a Fast Fourier Transform section, 62. The signal processor and control section may be separate entities or they could all be incorporated into a microcontroller, DSP chip or ASIC.

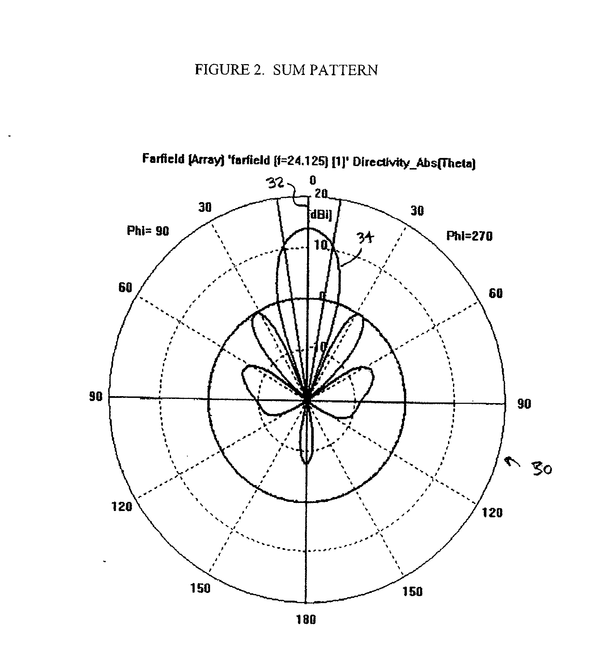

The transmitting section 18 transmits a directional signal in the microwave frequency range that covers the area of interest 72. The transmitted radiation pattern, 30, is determined by the pattern of the transmitting antenna 26. As shown, the radiation pattern has a main lobe, 34, that is centered on the main transmission axis, 32. If the transmitting section doesn't have a separate antenna, but makes use of the two receiving antennas 20, 22 than the pattern will be as shown in FIG. 2, as determined by the array pattern of the receiving antennas 20 and 22 as is know by those skilled in the art.

The receiving section 12 consists of a number of amplifiers and filters necessary to provide the signal processor with signals in the proper amplitude and frequency range.

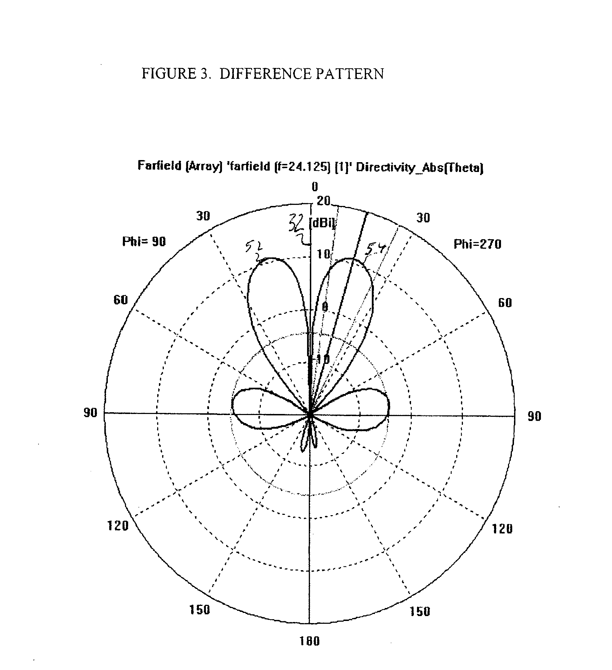

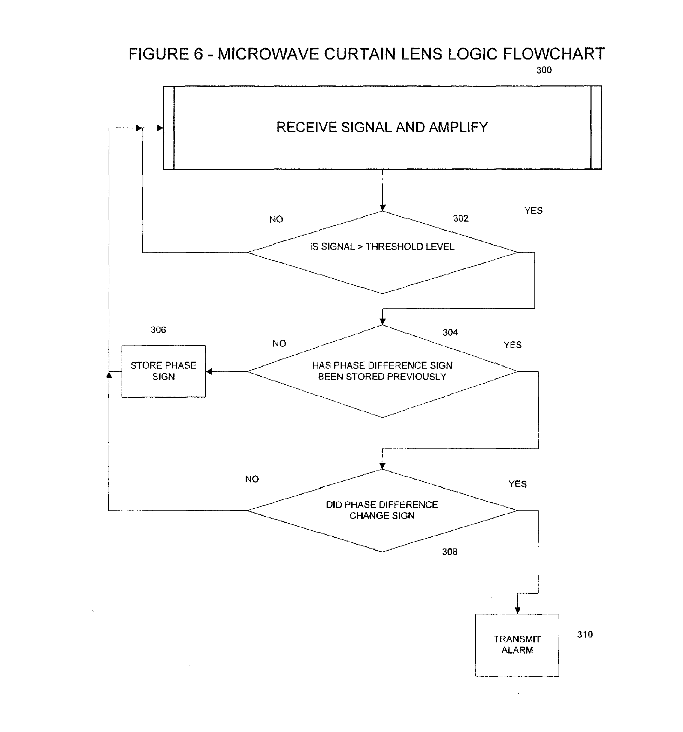

In the Amplitude Comparison Monopulse embodiment of FIG. 4, the receiving section consists of two antennas, 20 and 22 that point slightly away from the center line and feed a 180 degree hybrid coupler, 200, which adds and subtracts the two signals, producing a pattern as shown in FIG. 2 for the sum and as shown in FIG. 3 for the difference. These two channels then feed two separate mixers, 201 and 202. The transmitting section couples a signal, using the microwave coupler 25, from the oscillator, 24, signal to mix with the signals from the receiving antennas, 20 and 22. The signals coming from the mixers 201, 202 consist of the Doppler frequencies which are then amplified by amplifiers, 206 and 208 and are then sent to the signal processor and control 210. The processing follows the steps as shown in FIG. 6. It should be noted in this regard that while FIG. 6 could be considered as showing a flow chart, FIG. 6 also depicts the processing modules 300, 302, 304, 306, 308, 310 that accomplishes those steps.

In the Phase Comparator embodiment, FIG. 5, the two receiving antennas 20, 22 point in the same direction. The two signals from the antennas are mixed with the transmitted signal from a coupler 25 using mixers 100 and 102, which outputs the Doppler signals on lines 114 and 116. These Doppler signals are amplified by amplifiers 104 and 106 and feed the Signal and sign processor. When a reflected signal originates from one side of the center line, the signal will arrive at one antenna before it arrives at the other antenna. This time difference of signal arrival can be measured by a time comparator. One antenna will be used as a reference. If the signal arrives at the reference antenna first it can be assigned a sign, but if it arrives at the other antenna first it will have the opposite sign. The Signal processor, 108, adds the two signals that will compared within the comparator to determine if the signal is of sufficient strength (i.e., exceeds a threshold) to indicate a true target. The phase of the signal will be analyzed to determine if the target is on the left side or the right side and then stored in a memory. The next set of signals that arrived will go through the same process and the phase sign will be compared with a phase sign the first, stored set. If there is a sign reversal, and alarm will be sent. This logic is shown in FIG. 6.

A specific embodiment of method and apparatus for detecting intruders has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

## Claims

1. A method of detecting an intruder, in a secure area, comprising:
receiving a microwave echo from opposing sides of a curtain line extending through the secure area;
determining a difference between the received echos;
determining a sign of the determined difference; and
generating an alarm when the determined phase changes sign between successively received echos.

2. The method of detecting an intruder as in claim 1 further comprising summing the received echos from opposing sides of the curtain line.

3. The method of detecting an intruder as in claim 2 further comprising comparing the sum echos with a threshold value.

4. The method of detecting an intruder as in any of claims 2 to 3 further comprising saving a first determined phase as a reference value.

5. The method of detecting an intruder as in claim 4 further comprising comparing a subsequently determined phase with the reference value to detect the sign change.

6. An apparatus for detecting an intruder, in a secure area, comprising:
a signal processing comparator that receives an echo from opposing sides of a curtain line extending through the secure area;
a phase difference determined by the signal processing comparator between the echos from opposing sides of the curtain line; and
a signal processor that detects an intruder when a sign of the determined phase difference changes between successive echos.

7. The apparatus for detecting an intruder as in claim 6 further comprising an echo sum determined by adding the echos from the opposing sides of the curtain line.

8. The apparatus for detecting an intruder as in claim 6 or claim 7 further comprising a comparator that compares the echo sum with a threshold value.

9. The apparatus for detecting an intruder as in any of claims 6 to 8 wherein the signal processing comparator further comprises an amplitude monopulse comparator.

10. The apparatus for detecting an intruder as in any of claims 6 to 9 wherein the signal processing comparator further comprises a phase monopulse comparator.

11. An apparatus for detecting an intruder, in a secure area, comprising:
means for receiving a microwave echo from opposing sides of a curtain line extending through the secure area;
means for determining a difference between the received echos;
means for determining a sign of the determined difference; and
means for generating an alarm when the determined phase changes sign between successively received echos.

12. The apparatus for detecting an intruder as in claim 11 further comprising means for summing the received echos from opposing sides of the curtain line.

13. The apparatus for detecting an intruder as in claim 12 further comprising means for comparing the sum echos with a threshold value.

14. The apparatus for detecting an intruder as in any of claims 11 to 13 further comprising means for saving a first determined phase as a reference value.

15. The apparatus for detecting an intruder as in claim 14 further comprising menas for comparing a subsequently determined phase with the reference value to detect the sign change.
